(19) **Europäisches Patentamt / European Patent Office / Office européen des brevets**

(11) **EP 3 849 100 B1**

(12) **EUROPEAN PATENT SPECIFICATION**

(45) Date of publication and mention
of the grant of the patent:
**22.01.2025 Bulletin 2025/04**

(21) Application number: **20217387.8**

(22) Date of filing: **28.06.2017**

(51) International Patent Classification (IPC):
**H04B 7/06** (2006.01)

(52) Cooperative Patent Classification (CPC):
**H04B 7/0619; H04B 7/0417; H04B 7/0639;**
G01S 5/0036; G01S 5/08; H04W 24/10;
H04W 64/00

(54) **DIRECTIONAL RADIO BEAM INFORMATION IN A MOBILE COMMUNICATIONS SYSTEM**

DIREKTIONALE FUNKLEITSTRAHLINFORMATIONEN IN EINEM
MOBILKOMMUNIKATIONSSYSTEM

INFORMATIONS DE FAISCEAU RADIO DIRECTIONNEL DANS UN SYSTÈME DE
COMMUNICATION MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.06.2016 EP 16176651**

(43) Date of publication of application:
**14.07.2021 Bulletin 2021/28**

(62) Document number(s) of the earlier application(s) in
accordance with Art. 76 EPC:
**17736608.5 / 3 476 059**

(73) Proprietor: **IPCom GmbH & Co. KG
82049 Pullach (DE)**

(72) Inventors:
• **SCHMIDT, Andreas
38124 Braunschweig (DE)**
• **BIENAS, Maik
38170 Schöppenstedt (DE)**

(74) Representative: **Tomlinson, Edward James et al
Df-mp Dörries Frank-Molnia & Pohlman
Patentanwälte Rechtsanwälte PartG mbB
Theatinerstraße 16
80333 München (DE)**

(56) References cited:
WO-A1-2013/185322    WO-A1-2016/011666
US-A1- 2014 349 677    US-A1- 2018 352 447

**Description**

The present invention relates to the provision of radio beam information for one or more radio beams in a mobile communications system.

With the evolution of cellular technology from existing 3.9G and 4G systems (such as 3GPP's LTE and LTE-Advanced radio access technologies) to 5G, higher frequencies are likely to be required. For example, the next generation radio access technology to be specified by 3GPP as a submission into the IMT 2020 process triggered by ITU-R is expected to operate in "legacy" frequency bands of up to 6 GHz and in some new frequency bands well beyond this point. Future base stations may therefore use wireless technology based on millimetre wavelengths (e.g., in frequency bands ranging from 20 to 300 GHz) to communicate with mobile devices within their coverage areas.

In order to achieve greater reach using a given power budget or to make use of the good spatial re-use properties radio links operated on higher frequencies offer, deployed base stations may utilize directional transmission and reception techniques to communicate with mobile devices.

This invention deals with directional antennas and beam steering methods, which are particularly useful for deployment in future communication systems operating in higher frequency bands. In principle, beam forming techniques can also be utilized in current cellular communication systems operating in "legacy" frequency bands below 6 GHz.

As opposed to omnidirectional antennas, directional antennas allow concentration of radio signals towards a certain spot or area. Concentration of radio waves into a certain direction can be achieved for instance with antenna arrays (also known as "phased arrays"). Usually, concentrated transmissions come along with a reduction of the respective radio beam's width.

An antenna array is an antenna system that encompasses a certain number of distinct antenna elements in a geometrical arrangement. The geometrical arrangement of these single antenna elements may vary significantly and determines the beam forming characteristics as follows: arranging multiple antenna elements in a row (e.g., in a 1x8 formation) would allow for two-dimensional beam forming within a (pre-defined) dissemination plane. An arrangement in matrix format (e.g., in an 8x8 formation) would allow for three-dimensional beam forming in a (pre-defined) dissemination space.

The relative phases of the respective signals feeding the distinct antenna elements forming an antenna array are set in such a way that the effective radiation pattern of the entire array is reinforced in a desired direction and - at the same time - suppressed in undesired directions. The phase relationship among the single antenna elements may be fixed or it may be adjustable (as for beam steering). The present invention is concerned with the latter.

A directed antenna beam (e.g., generated by means of a one dimensional antenna array, such as the 1x8 phased array mentioned above) usually consists of a strong main lobe pointing in the desired direction of signal reinforcement and at least one side lobe with much less intensity.

While the directional transmission and reception techniques may provide a given base station with greater reach, a trade-off may be that at any point in time, they may provide coverage to only part of that base station's coverage area. In order to provide coverage to its entire coverage area over time, a base station may (e.g. continuously or occasionally) modify its directional transmission and reception orientations. From the perspective of a given mobile device in the base station's coverage area, this may mean that data can be exchanged only at certain times, namely times at which the base station's directional transmission and reception orientation is approximately in the direction of the mobile device.

With a two dimensional antenna array, two beam forming operations may be performed. A radio beam can be tilted vertically and laterally. By placing the antenna array at a suitable height above the ground, a base station is able to concentrate a main lobe towards a particular region on the ground which may be considered as a sub-section within a base station's coverage area.

Beam steering within mobile communications systems is known. US 2014/235254 A1, for example, describes a set of femto access points (FAPs) utilized to localize, predict, and/or weight potential wireless communication traffic within and between areas. Moreover, attachment data can be indicative of user equipment (UE) density/traffic within coverage areas of respective femtocells. The attachment data can be consolidated and analysed to identify location and motion of a UE "swarm". Moreover an automatic cell planning (ACP) component can be employed to utilize the attachment data for determining an optimal macro site and optimal antenna setting(s) that facilitate steering/tuning the macro antenna beam to focus upon the swarm area. In addition, the ACP component can facilitate reconfiguration of the macro antenna beam as reported swarm concentrations shift between the FAPs.

US 2014/0349677 A1 describes a method for determining a position of a UE with respect to multiple base stations. The base stations transmit a positioning reference signal and a reference signal time difference is determined at the UE. This value is reported to the network for use in determining a position of the UE. WO 2016/011666 A1, also published as US 2018/0352447 A1, describes a method for determining a location of a UE in which a base station transmits a directional beam such that it scans a sector of a cell over a number of regions. For each region, the beam transmits an identification sequence using OFDM symbols. The UE transmits a message containing the identification sequence of the received signal with the highest correlation peak value to the transmitting base station, enabling the base station to determine the probable region in which the UE is located. WO 2013/185322 A1 describes a method for determining a position of a UE in which the UE measures a downlink/uplink timing difference which is used to determine a distance between the base station and the UE.

The present invention provides a method to determine a location of a user equipment, UE, device in a mobile communication system in which an infrastructure node utilizes directional beam signals for the exchange of data between the infrastructure node and the UE device according to claim 1.

Embodiments of the present invention may include information about a current beam forming and/or hopping configuration of a transmission and reception point (TRP) in a radio signal. In other words, a form of lobe direction indicator (LDI) or a beam identifier or a target area itemization code is included on a downlink signal that differs from sub section to sub section.

According to an embodiment of the present invention, a mobile device may receive the signal or identifier and may report it in an uplink direction to its serving base station (e.g., as part of positioning activities). On the infrastructure side the LDI may be used to assist in determining the mobile device's position. In order to enhance accuracy, it may be beneficial to let the mobile device report multiple LDIs received from multiple second base stations.

In the context of the present invention a directional beam signal shall be understood as a directed radio transmission in general, i.e. a directional beam signal may be made up of one or multiple stationary and/or (partially) moving transmission lobe(s), whereby the kind of movement may be anything from hopping in coarse granularity to continuous sweeping in fine granularity.

Preferred embodiments will now be described, by way of example only, with reference to the accompanying drawings in which:

Fig. 1    shows a coverage area of a transmission and reception point;
Fig. 2    shows a schematic representation of a heterogeneous network;
Fig. 3    illustrates a downlink resource grid for FDD-LTE;
Fig. 4    is a schematic representation of a UE within a heterogeneous network;
Fig. 5    is a schematic representation of a UE within a heterogeneous network;
Fig. 6    illustrates the transmission of a beam identifier using spare sub-carriers;
Fig. 7    illustrates the transmission of a beam identifier using phase shift keying of synchronization signals;
Fig. 8    illustrates the transmission of a beam identifier using phase shift keying of synchronization signals across multiple frames;
Fig. 9    illustrates phase shift keying of synchronization signals in an I/Q diagram;
Fig. 10   shows an example of a message sequence chart; and
Fig. 11   shows an example of a message sequence chart implementing an embodiment of the present invention.

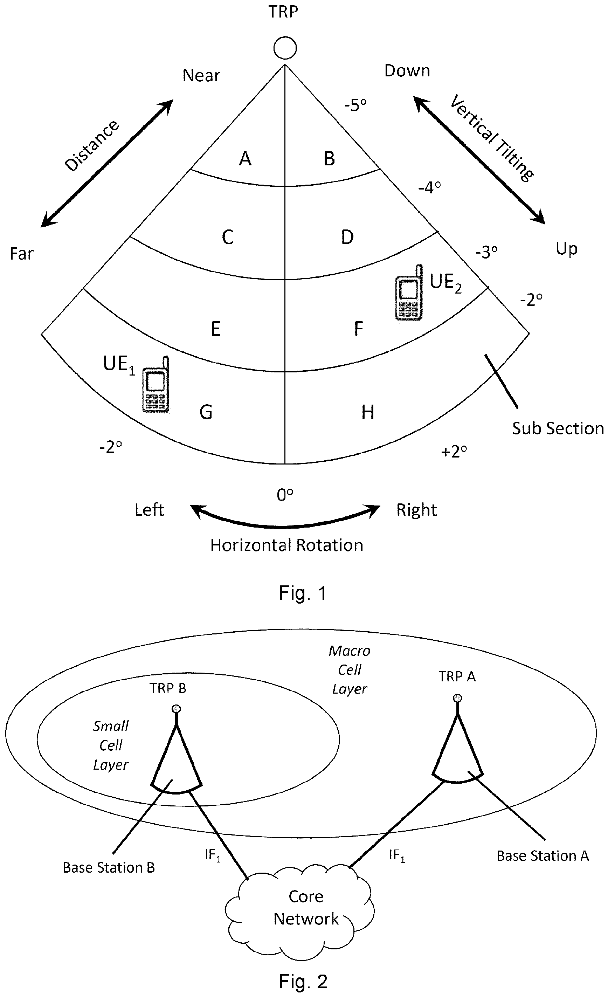

Referring to Fig. 1, there is shown an example of a coverage area of a transmission and reception point TRP that supports beam forming. The coverage area is shown schematically to illustrate the principles of the present invention. The coverage area shown may be an excerpt of a bigger coverage area. In this example it is subdivided into eight sub sections A through H. In detail, a vertical tilt of -2° plus a horizontal rotation of -2° (to the left) would enable the base station to service sub section G, i.e. to provide a wireless connection to UE1. Similarly, a vertical tilt of -3° plus a horizontal rotation of +2° (to the right) would enable the base station to provide its service offerings to UE2 residing in sub section F. The sub-sections represent areas which would be illuminated by a beam generated when the antenna elements at the TRP are subject to the appropriate beam forming characteristics.

As the end points of beams are concentrated on relatively small spots (i.e. the base station's directional transmission and reception orientation is at any point in time directed to exactly one of the sub sections A through H of the base station's coverage area according to Fig. 1), the base station may control the orientation of lobes from the TRP in such a way that all (or at least all relevant) sub sections are served successively. This solution is reasonable e.g. if the location of the receiving UE is unknown. The hopping pattern doesn't have to be in strict order from A to H; it may be any order. Even skipping one area or another from time to time and/or serving an area multiple times during one cycle would be possible (e.g., depending on population of mobile devices and/or their traffic demands). A deployment scenario like this (with sequential hopping from one sub section to the next one) will be referred to as Example Configuration #1 in the following description.

It is also possible for a TRP to simultaneously create multiple lobes pointing into different or roughly the same direction. For example, in the scenario of Fig. 1, a lobe structure of four main beams could be created offering equally good coverage at the same time instance to sub sections C, D, E, and F - provided that the antenna array is composed of a number of antenna elements adequate to create such complex lobe structures. A deployment scenario like this (with multiple lobes serving more than one sub section at the same time) will be referred to as Example Configuration #2 in the following description.

Furthermore, it is possible for a TRP to combine the two example TRP configurations #1 and #2 discussed above,

EP 3 849 100 B1

i.e. to create complex lobe structures consisting of multiple radio beams that are (partially or entirely) hopping through a coverage area. Within such a complex lobe structure, new lobes may be created and existing lobes may be deactivated on a per need basis or based on some algorithms. Lobes may also partially overlap in the time and/or space domain(s). For example, in reference to Fig. 1, the TRP could be configured at a first time instance to form a lobe structure made up of four main beams offering equally good coverage to sub sections A, B, C, and D, then (at a second time instance) a lobe structure made up of four main beams offering equally good coverage to sub sections C, D, E, and F, and so on. In another example, again with reference to Fig. 1, the TRP could be configured at a third time instance to form a lobe structure made up of five main beams offering equally good coverage to sub sections A, C, E, G, and H, then (at a fourth time instance) a lobe structure made up of three main beams offering equally good coverage to sub sections F, G, and H, and so on.

Referring to Fig. 2, there is shown a schematic example of a communications network. In order to provide optimum network coverage many deployment scenarios in today's cellular communication networks combine a macro cell layer (base stations operating on a first, often lower, frequency layer covering a big service area) and a small cell layer to increase data throughput (base stations operating as "booster cells" on a second, often higher, frequency layer deployed to service certain hot spots). The example network architecture in Fig. 2 shows base station A operating on the macro cell layer and base station B operating as a "booster cell" on the small cell layer. Such a deployment is referred to as a heterogeneous network or HetNet. Some types of mobile devices can connect to both types of frequency layers simultaneously for example in the context of Carrier Aggregation (CA) or Dual Connectivity (DC).

To enable seamless connectivity, mobile devices are constantly required to perform neighbour cell measurements (NCM) on neighbouring cells.

In RRC_IDLE mode of operation NCM are needed to allow a terminal to always camp on the best cell. If a terminal detects a stronger cell, it initiates the cell re-selection procedure (which may, in some cases, trigger a tracking area update). In idle mode, mobility is always UE controlled and most of the measurement criteria is determined by SIB messages.

In RRC_CONNECTED mode of operation NCM are needed, so that a terminal can inform the base station during an ongoing connection about the detection of stronger cells. Based on the measurement reports received from the terminal, the base station may then prepare the switch of an ongoing connection from the current source cell into a new target cell by triggering the handover procedure. In connected mode mobility is network controlled and most of the measurement criteria is determined by specific RRC Messages dedicated for a particular mobile device.

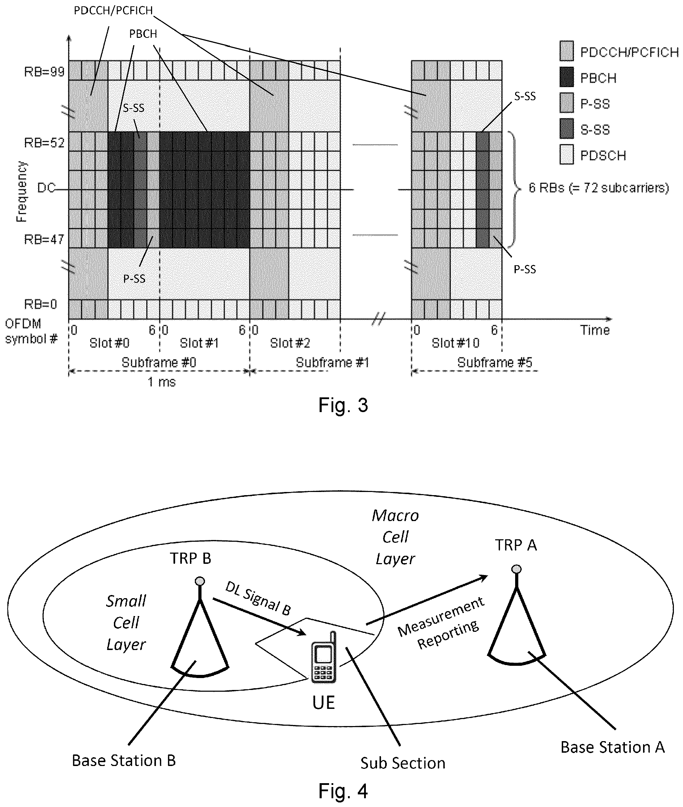

In LTE, the downlink is based on orthogonal frequency division multiplexing, OFDM. In Fig. 3 an exemplary LTE downlink resource grid of a 20 MHz carrier in a FDD system is given. On the y-axis the frequency domain is shown with the various OFDM sub carriers. A carrier with a nominal bandwidth of 20 MHz consists of 100 Resource Blocks (RBs). As there are twelve sub carriers per RB and the sub carrier spacing is 15 kHz (in subframes not configured for MBMS), the useable bandwidth is 18 MHz in total (which is 90% of the nominal 20 MHz bandwidth). The edges of the LTE channel bandwidth are guard bands (1 MHz on each side). In the centre, the so-called DC-carrier is shown in the middle between RBs 49 and 50.

The x-axis represents the time domain. In the present exemplary downlink configuration ("normal cyclic prefix"), there are 7 OFDM symbols per slot. Two slots make up a subframe of 1 ms duration. There are ten subframes per frame.

In every downlink resource lattice, regardless of the configured bandwidth, primary (P-SS) and secondary (S-SS) synchronization symbols are located in the last two symbols of slots #0 and #10. These are not spread over the entire bandwidth of the carrier. Instead they only stretch over the six inner RBs, i.e. from RB#47 to RB#52. This RB numbering is valid only for a system bandwidth of 20 MHz. In case of a smaller system bandwidth, the numbering differs. But in any case, the synchronization symbols are located around the DC carrier.

The smallest time-frequency unit for downlink transmission is denoted a resource element (as described in section 6.2.2 of 3GPP TS 36.211). A downlink physical channel corresponds to a set of resource elements carrying information originating from higher layers. A downlink physical signal corresponds to a set of resource elements used by the physical layer but does not carry information originating from higher layers. Downlink physical signals may be reference signals or synchronization signals.

As indicated, primary synchronization signals (P-SS) are located in the six innermost RBs centred around the DC-carrier in symbol #6 of slot #0 (in subframe #0) and slot #10 (in subframe #5). They are built from a Zadoff-Chu sequence of length 62 with three different sequences being defined, selected based on the Physical Cell ID. Out of 72 sub carriers only 62 are carrying the P-SS data; the remaining 10 subcarriers (five on each side) are zero padded. The P-SS signals are used for downlink frame synchronization and to determine the Physical Cell ID (together with S-SS). In an LTE TDD system, the P-SS are mapped to the third symbol of the first slot in subframes #1 and #6.

Secondary synchronization signal (S-SS) are located in the six innermost RBs centred around the DC-carrier in symbol #5 in slot #0 (Subframe #0) and in slot #10 (Subframe #5). The S-SS sequence used in subframe #0 is different from the one used in subframe #5. 168 different sequences are defined, selected based on the Physical Cell ID. They are made up of 62 scrambling sequences (based on m-sequence calculation). The values in odd indexed resource elements and the ones in even indexed resource elements are generated from different equations. The S-SS signals are used for downlink frame synchronization and are used to determine the Physical Cell ID (together with P-SS). In an LTE TDD system, the S-SS are mapped to the last symbol of the second slot of subframes #0 and #5.

The symbol location of P-SS/S-SS in time domain is different between a FDD and a TDD system as this helps the UE to identify, if this is a FDD or a TDD system.

Since the location of P-SS/S-SS is always fixed in frequency domain, the UE can easily do a correlation at the expected band to get the P-SS/S-SS, from which the UE can acquire many parameters such as the physical cell ID (PCID), the duplexing mode FDD vs. TDD (from the location of P-SS/S-SS in the time domain), the subframe number (from the S-SS sequence), and also the slot boundary.

P-SS and S-SS together define the physical cell ID (PCID) of a radio cell. A UE detects the physical layer identity from the P-SS and the physical layer cell identity group from the S-SS. As discussed above, there are three different P-SS (= Layer_ID) and 168 different S-SS (= Group_ID), limiting the maximum number of PCIDs to 504. The PCID is composed according to the following formula:

$$PCID = 3 * Group\_ID + Layer\_ID$$

Fig. 4 shows a HetNet scenario in which a mobile device (UE) has an ongoing connection to base station A. Hence, base station A has configured the mobile device for collection and reporting of NCM. Within the coverage area of base station A which is providing macro cell layer coverage another base station (base station B) is operating on the small cell layer using beam forming techniques. It is assumed that TRP B is configured to use a beam hopping pattern (according to Example Configuration #1).

When the first base station (base station A) receives NCM results from a UE containing measurements that have been collected on the small cell layer of a second base station (base station B) where beam hopping has been activated, the infrastructure side has currently no means to identify the sub section of the cell in which the respective set of measurements has been collected. That means information about the TRP's beam forming configuration at the time of measurement collection is not known, or -to put it another way- it is not possible either for the first or for the second base station to provide and/or derive any TRP control information from the NCM results that would be helpful for quick beam forming on the small cell layer in order to target the respective UE specifically (for example, when a second radio link in scope of CA or DC is supposed to be set up).

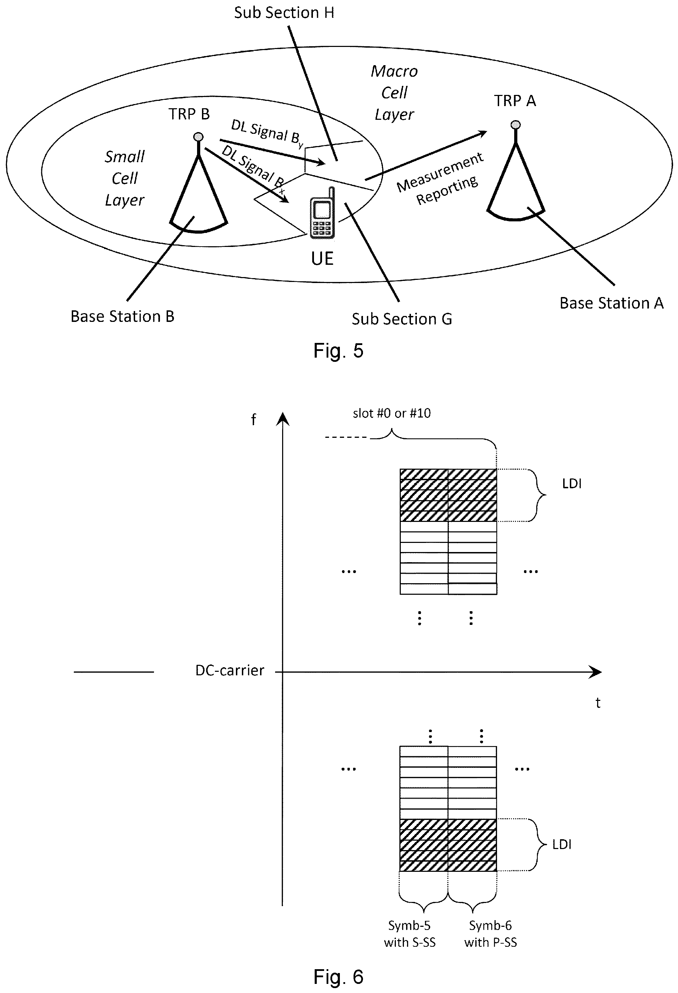

Accordingly, the HetNet of Fig. 4 is modified as shown in Fig. 5.

Base station A is providing macro cell layer coverage and base station B is operating on the small cell layer using beam forming techniques. In detail, TRP B assigned to base station B is configured to apply a beam hopping sequence, such as the pattern according to Example Configuration #1 discussed above in context with Fig. 1.

At a first time instance $t_x$ the beam disseminated by TRP B is directed to sub-section G (as shown in Fig. 5), while at a second time instance $t_y$ the beam is directed to another sub-section of the coverage area, namely sub section H. At a further time instance the beam may jump back to serve sub-section A (not shown), so that a new hopping cycle can begin. In this example we assume that the dwell time of the beam in each sub-section has a constant value of N seconds. That means an entire cycle with M sub-sections to be served would have a duration of N * M seconds.

As discussed above, according to Example Configuration #2 with multiple lobes serving more than one sub section at the same time, a downlink signal $D_Z$ (not shown) may have a complex lobe structure with individual lobes directed at sub-section G and sub-section H at the same time.

A lobe direction indicator (LDI) or a "beam identifier" or a "target area itemization code" is included in the respective TRP's downlink signal (i.e. in the various beams disseminated by TRP B in the Fig. 5). The value of this parameter uniquely identifies (at least from a base station's perspective) a lobe direction (or a beam or a target area). It changes from sub-section to sub-section.

With respect to Example Configuration #2, a base station may control the simultaneous dissemination of multiple lobes from a TRP in such a way that individual beams (or at least certain sub sets of beams) are carrying different LDIs. For this, a form of LDI multiplexing would be required, to enable proper reception of different simultaneously transmitted LDIs. Details on different LDI multiplexing options according to this invention are provided below.

The LDI signal is provided with or within the physical layer rather than in any of the higher protocol layers of the cellular communication system. The following describes different encoding options to achieve this.

In a first encoding option, the spare sub-carriers at the edges of RBs #47 and #52 (in the 20 MHz example of Fig. 3, for other nominal bandwidths the RB numbers differ) are used to transmit the LDI in the downlink direction thereby spreading the LDI information in the frequency domain.

On each side, five sub carriers are currently left unused offering an opportunity to encode at least 10 bits (per symbol length) when we use a simple On/Off Keying (OOK) or, for example, 20 bits per symbol length when we use Quadrature Phase Shift Keying (QPSK). In case of QPSK the number of supported beam identifiers is in the range of up to $2^{20}$ (per symbol length). As synchronization signals appear four times per frame (namely, twice in each of the slots #0 and #5) there is enough flexibility to encode the LDIs even with some redundancy to enhance the reliability of the LDI. Well known methods for error detection and/or correction could also be applied. Furthermore, these spare sub-carriers may be used with reduced transmission power (at least lower than the carriers carrying the P-SS and S-SS information) in order not to disturb the synchronization process. Fig. 6 gives an example configuration. The five spare sub carriers at the edges of the six inner most RBs in symbols carrying the S-SS and P-SS are used to transmit the LDI in the downlink direction.

In another variant, only some of the 10 unused subcarriers, e.g. only 4 so that some (6 in this example) subcarriers remain unused to offer a guard interval.

Some UEs might encounter difficulties in finding the sync signals quickly, so the synchronization process might take a little longer, but this drawback can be mitigated when the transmission power applied to the sub carriers for the LDI signal is reduced (compared to the transmission power of the sub carriers used for P-SS and S-SS).

Complex lobe structures according to Example Configuration #2 of the present invention might require identification of individual lobes if multiples lobes were received simultaneously. This can be achieved by assigning different LDIs to distinct lobes by applying multiplexing techniques on the resources available. Here, multiple LDIs could for instance be multiplexed in the frequency domain (e.g., different LDIs in different sets of sub carriers) or in the time domain (e.g., different LDI from frame to frame) on the available spare sub carriers and/or CDMA techniques could be used to spread individual LDIs with different codes (bearing suitable auto- and cross-correlation properties).

In a second encoding option, instead of using the spare sub carriers space for our purposes, the P-SS and/or S-SS are themselves used for indicating the LDI value of a beam by using phase shift keying (PSK) that alters the phase of all 62 synchronization symbols by a single phase shift value, thereby spreading the LDI information over time.

For example, in any given frame the phases of the respective set of synchronization symbols of P-SS and S-SS in slot #0 as well as P-SS and S-SS of slot #10 are shifted. In principle, this phase shifting method is not restricted to slots within a single frame; in order to enhance the amount of LDIs it may continue across multiple frames, too.

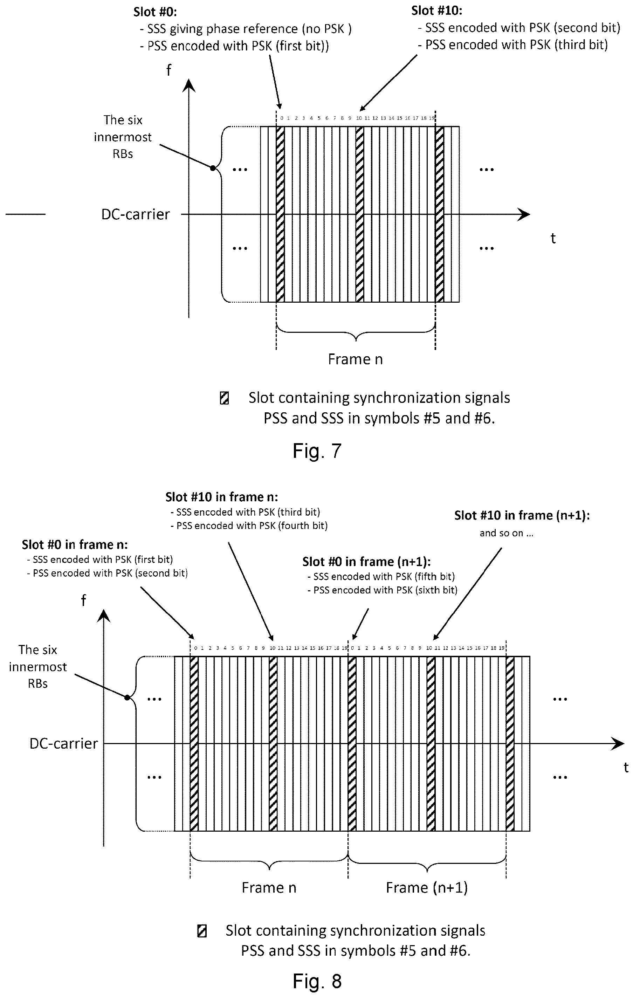

However, it is deemed advantageous to use the phases of one synchronization signal per frame (in the example of Fig. 7, the first S-SS in slot #0) as a reference for the upcoming three phase shifts in the same frame, i.e. not to perform phase shifting on this synchronisation signal. As there are in total four occurrences of P-SS/S-SS symbols per frame (namely, two in each of the slots #0 and #10), this method would allow encoding of three bits per frame (assuming that the first occurrence of the S-SS in slot #0 serves as a phase reference and assuming encoding of one bit per synchronization sequence). If the phase shifting is not restricted to within a single frame, more than three bits could be encoded.

Other ways to enhance the number of LDIs are for instance: using all four synchronisation sequences per frame (in this case the phase reference cannot be indicated), or spreading the coding over more than one frame (e.g. coding over two frames without phase reference sequence would allow for an eight bit LDI, as shown in Fig. 8), or using more coding symbols (e.g. using four different phases instead of two would provide two bits per synchronisation sequence). All these methods could be combined to obtain the desired amount of LDIs.

Fig. 7 shows the variant of deploying phase shift keying within a single frame. In this case the S-SS symbol residing in slot #0 is serving as a phase reference. Fig. 8 depicts the variant of deploying phase shift keying across multiple frames (perpetual encoding).

Theoretically, it would be possible to shift the phases of the respective set of synchronization symbols by any value between $\pm 180°$, but we propose to only use a maximum phase shift value of $\pm 90°$ for the selected sub carriers, in order to allow receiving legacy UEs, which may not be aware of this new modulation, to easily filter out the LDI information (which is solely contained in the $\pm 90°$ phase rotation) over time.

As theoretically more coding symbols per synchronization symbol could be used (e.g. using four different phases) a $\pm 45°$ phase rotation and a $\pm 135°$ phase rotation could be combined.

The encoding variants of Figs. 7 and 8 can also be combined by grouping several consecutive frames to a block of frames, thereby using only one (e.g., the very first) S-SS in the block as a phase reference (i.e. not shifting it) while all the other S-SS occurrences in the block may be shifted as needed.

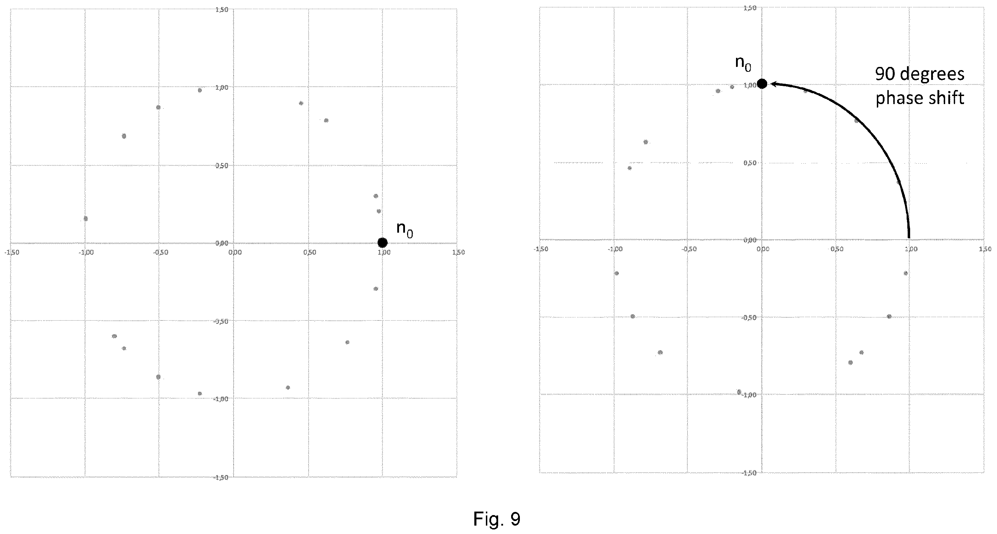

Fig. 9 shows two example constellation diagrams for (the first 32 values of) a P-SS sequence: On the left, the values of the P-SS sequence are not shifted (state-of-the-art). On the right, they are shifted by +90° according to the PSK encoding concept. The first value $n_0$ of the P-SS sequence is highlighted for better readability in both constellation diagrams. The $\pm 90°$ phase shifting of the other synchronization symbols is performed similarly (not shown here for sake of brevity).

As discussed above, complex lobe structures according to Example Configuration #2 of the present invention might require identification of individual lobes if multiples lobes were received simultaneously. This can be achieved by assigning different LDIs to distinct lobes by applying multiplexing techniques on the resources available. For the second encoding option (especially in case several consecutive frames are grouped to a block of frames), multiple LDIs could for instance be multiplexed over time and/or CDMA techniques could be used to spread individual LDIs with different codes (bearing suitable auto- and cross-correlation properties).

A third encoding option is a combination of options 1 and 2, i.e. coding the LDI in the spare sub-carriers and onto the synchronization signals (not shown).

In a fourth encoding option, special resource elements (REs) or resource blocks (RBs) in the LTE downlink lattice, i.e. others than those reserved for P-SS and S-SS, are defined to carry the LDI in the downlink direction. For example, the LDI information could be transmitted in REs or RBs (collectively resource regions) formerly allocated to the PDSCH (physical downlink shared channel) region of the grid, and legacy UEs could be configured to ignore this information e.g., by appropriate scheduling. This can be seen as a definition of a new physical signal in the time frequency lattice of an LTE communication system for providing information related to beam forming and beam tracking (in addition to the two already existing physical signals defined for downlink reference and synchronization).

A possible drawback with this option is it eats into the resources originally destined for the PDSCH.

In the fourth encoding option multiple lobes as they may appear in complex lobe structures according to Example Configuration #2 of the present invention can be assigned distinct LDIs by applying all kinds multiplexing techniques on the resources available. For instance, in the fourth option different LDI values can be multiplexed in the frequency domain and/or in the time domain and/or by means of CDMA techniques.

A fifth encoding option is to put the information into the master information block (MIB) or one of the subordinate system information blocks (SIB) designed for system information broadcast in the mobile communications system. This requires that the respective information (i.e. the LDI) is changed if the beam is directed to the next subsector. As system information was not designed to allow broadcast of quickly changing information elements, this option is suitable when the formation and/or hopping of beams is a rather slow procedure.

Having obtained the LDI by means of one of the above options, or otherwise, the LDI receipt is reported to the network. For example, this reporting may be done either during the course of its regular NCM reporting (according to the first embodiment of the present invention), or during the course of its regular positioning activities (according to the second embodiment of the present invention), or otherwise.

If the UE reports the (at least one) detected LDI value(s) in the course of its regular NCM reporting, some RRC information elements need to be enhanced as follows.

In the MeasConfig information element (IE) that is contained in the RRC Message "connection reconfiguration" (as described in 3GPP TS 36.331) a new IE could optionally be added for the configuration of measurement thresholds (incl. dwell time) and reporting events particularly tailored to measurements collected on directive antenna beams.

UEs in RRC_CONNECTED report their measurement results in the MeasResults IE contained in the RRC Message "measurement report" (as described in 3GPP TS 36.331). For the present invention, a new object may be included in the MeasResults IE enabling the UE to report details related to detected directive antenna beams, such as the LDI, the signal strength, and the dwell time in coverage of the respective beam. There can be multiple (up to maxBeamReport) MeasResultBeam instances for example in a SEQUENCE structure - one for each beam detected. Such an IE may have the following form:

```
MeasResultBeamList ::=        SEQUENCE (SIZE (1..maxBeamReport)) OF MeasResultBeam

MeasResultBeam ::=    SEQUENCE {
    physCellId              PhysCellId,
    LDI                     INTEGER (0..63),
    cgi-Info                SEQUENCE {
        cellGlobalId            CellGlobalIdEUTRA,
        trackingAreaCode        TrackingAreaCode,
        plmn-IdentityList       PLMN-IdentityList2
    },
    measResult              SEQUENCE {
        rsrpResult              RSRP-Range,
        rsrqResult              RSRQ-Range,
    DwellTime               ENUMERATED {ms120, ms240, ms480, ms640, ms1024,
                                ms2048, ms5120, ms10240, min1, min2,
                                spare2, spare1}
    }
}
```

Alternatively, a new IE MeasResultBestBeam object containing the important attributes of the best beam detected, such LDI, signal strength, and dwell time in coverage of the respective beam may be defined and included with the following form:

```
measResultBestBeam ::=          SEQUENCE {
    physCellId-r10                  PhysCellId,
    LDI                             INTEGER (0..63),
    rsrpResultNCell-r10               RSRP-Range,
    rsrqResultNCell-r10               RSRQ-Range,
    DwellTime                       ENUMERATED {ms120, ms240, ms480, ms640, ms1024,
                                          ms2048, ms5120, ms10240, min1, min2,
                                          spare2, spare1}

}
```

Further IEs that may be reported by a UE per beam are, for instance: reference signal time difference (RSTD) and Rx-Tx-time-difference. These are not shown in the above IE representations for the sake of brevity. However, they shall not be excluded from the scope of the present invention.

Once one or more LDIs have been received by the infrastructure side (for example, by macro cell Base Station A of Fig. 5 receiving a "measurement report" RRC Message modified according to this invention), the beam specific measurements may be processed and lobe control parameters may be derived for TRP B to enable steering of a directed radio beam to a particular spot (i.e. a beam specific for one or more UEs residing at a certain location instead of hopping beams), so that handover and/or cell addition/activation (e.g., in a CA or DC environment) can be initiated right away. For this it is advantageous to provide a look-up table on the infrastructure side. This look-up table may for example reside in one of the involved macro cell layer or small cell layer base stations or in another logical entity in the radio access network (RAN) or core network (CN) of the cellular communication system. Table 1 shows an example look-up table according to this invention. If the UE of Fig. 5 in the multi-lobe beam arrangement Example Configuration #2 reports a beam $Beam_G$ received from TRP B as the strongest lobe received at its current location for a reasonable dwell time (e.g., the dwell time of UE in $Beam_G$ is above the threshold received previously in the MeasConfig IE). Let's further assume the LDI value was set to "7" on $Beam_G$. In addition to this the UE of Fig. 5 might also report other beams with their respective LDIs (in a further embodiment, these other beams might be transmitted by the same or by other transmission and reception points) as being beams with an acceptable signal strength, but with a much shorter dwell time, and beams with an acceptable dwell time but a much lower signal strength. The infrastructure side can now quickly determine all parameters (from the the look-up table) needed for TRP B to form an optimal beam to serve the UE in question. The originally configured beam hopping pattern can be altered (if required). The UE doesn't have to wait for TRP B to complete a full hopping cycle.

TABLE 1

| Reported Value | Transmission and Reception Point (TRP) Parameters | | | | | Targeted Sub Section |
|---|---|---|---|---|---|---|
| | Horizontal Rotation | Horizontal Beam Width | Vertical Tilting | Vertical Beam Width | TX Power | |
| LDI = 1 | -2° left | 60° | -5° | 10° | 81% | A |
| LDI = 2 | +2° right | 60° | -5° | 10° | 82% | B |
| LDI = 3 | -2° left | 60° | -4° | 10° | 86% | C |
| ⋮ | ⋮ | ⋮ | ⋮ | ⋮ | ⋮ | ⋮ |
| LDI = 7 | -2° left | 30° | -2° | 15° | 95% | G |
| LDI = 8 | -2° right | 30° | -2° | 30° | 98% | H |

In the present example, the UE of Fig. 5 residing in sub-section G will be provisioned by TRP B with an optimal radio beam orientation to set-up a new or additional communication link on the small cell layer. The lobe's optimal orientation has a rotation of -2° to the left, and a vertical tilt of -2°. The TX power previously used in this direction can also be read from the look-up table. In this example, it was 95% of the maximum TX power.

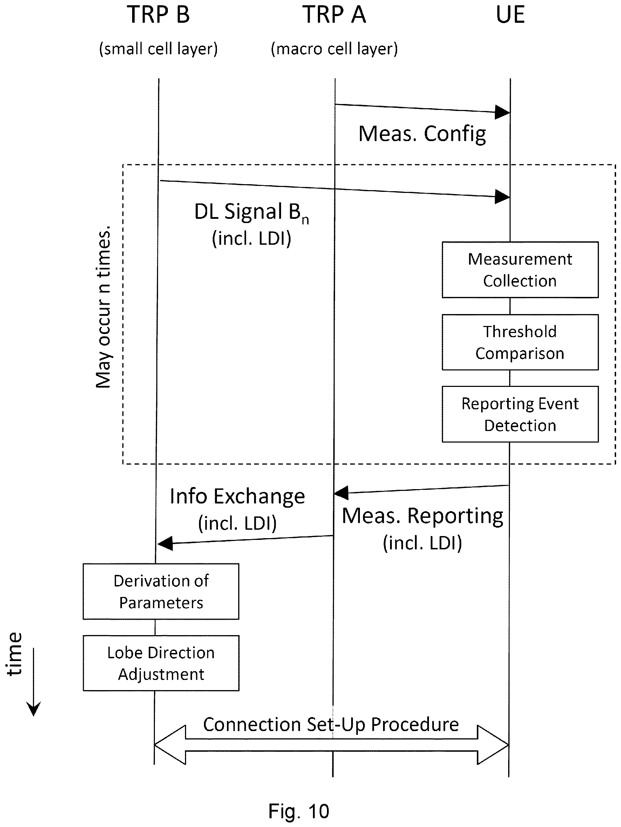

Fig. 10 shows a flow chart with messages exchanged in the course of a method relating to beam steering. A first base station (Base Station A offering a macro cell layer) through TRP A configures the UE with NCM. TRP B is the transmission and reception point associated with a second base station (Base Station B offering a small cell layer) and capable of supporting beam forming and tracking methods. According to the NCM configuration the UE may perform measurements on various beams and report the results back to the first base station including the inventive LDI. For reporting the UE may also take various thresholds related to the received signal strength and/or the dwell time of each detected beam into account, thereby reducing the overall number of measurement values to the most relevant lobes. On the infrastructure side the measurement report(s) is (are) evaluated. If on the infrastructure side it is decided to establish an additional connection between the UE and the second base station e.g., in course of Carrier Aggregation (CA) or Dual Connectivity (DC) operation, or to hand off the UE from the first base station to the second base station then information (including the LDI) may be exchanges between the first base station and a second base station so that the second base station may derive a set of TRP parameters from a memory (data repository) based on at least the LDI information. Said TRP parameters may then be used to direct TRP B's transmission and reception orientation to target the respective UE right away. This may mean, that TRP B's current beam hopping pattern (cf. Example Configuration #1) and/or the currently configured multiple lobe structure (cf. Example Configuration #2) need(s) to be altered. Once the lobe's transmission and reception orientation has been adjusted to meet the UE's position, a further carrier can be activated/added or a handover procedure can be initiated.

If the UE reports the (at least one) detected LDI value(s) in course of its regular reporting activities for positioning, some RRC information elements could be enhanced in a similar manner.

In an embodiment of the present invention relating to providing positioning information, the content of Table 1 doesn't have to be as comprehensive as in the example shown above.

In some cases, it may be sufficient to only provide a mapping of LDI values to horizontal rotation angles. In cases, where the vertical position is important, the vertical tilting could be used in addition to the horizontal rotation angles. In order to increase the accuracy for determining a mobile device's position, it is beneficial to take (at least one of) the following measures:

a) Configure the TRP to generate relatively narrow lobes;
b) Use a fine granularity for the horizontal rotation angle;
c) Configure the mobile device to report multiple LDIs from different TRPs;
d) Configure the mobile device to report the reception level (i.e. signal strength) of each reported LDI, and
e) Use multiple reported LDIs in the position determination process. This might involve derivation of TRP configuration settings from more than one look-up table.

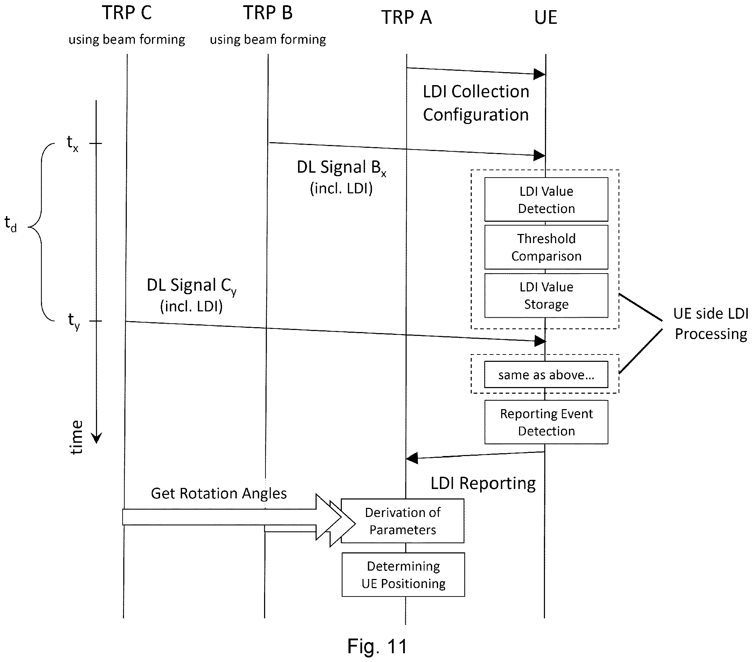

Fig. 11 shows a flow chart for an embodiment with messages exchanged in the course of the procedure of the invention. A first base station (base station A, for instance offering a macro cell layer) through TRP A configures the UE for LDI collection and reporting. According to this configuration the UE may try to pick up from surrounding base stations (e.g., second base stations, such as base stations B and C offering a small cell layer) as many LDI values as possible. The detected LDIs may be compared against thresholds received as part of the configuration and stored if appropriate (i.e. if certain criteria are met). Once a reporting event is detected (for example, when the mobile device has collected a sufficient number of LDI values from surrounding base stations, or upon receiving an appropriate request from the infrastructure side), the mobile device may choose to generate an LDI report for submission in an uplink direction to the first base station. With knowledge of the various TRP's geolocations and the various beam's horizontal rotation angles and probably the vertical tiltings (both can be derived from look-up tables by means of the reported LDI values) the mobile device's position can be calculated on the infrastructure side.

One possible criteria for LDI storage and/or reporting could be the time difference between two arbitrary LDI values on UE side (for instance, LDI values received via DL Signal $B_x$ and DL Signal $C_y$ of Fig. 11). If the time difference $t_d = t_y - t_x$ is above a certain threshold this indicates that the derived position would be inaccurate due to the mobile device's movement between two reception occasions of the different LDIs. The mobile device may then choose to delete a (series of) previously received LDI value(s) (e.g., the one received via DL Signal $B_x$) and begin a new LDI collection cycle (e.g., using the LDI received via DL Signal $C_y$ as a new start value). If the time difference $t_d = t_y - t_x$ is below a configured threshold the mobile device may choose to report the (at least one) previously received LDI value(s) (e.g., the ones received via DL Signal $B_x$ and DL Signal $B_y$).

The term Transmission and Reception Point (TRP) used throughout the text shall explicitly include transmission and reception capabilities. Thus, a directed orientation for radio communication may include a transmission orientation (in downlink direction, i.e. from the tower to the mobile device) and/or a reception orientation (in uplink direction, i.e. from the mobile device to the tower).

A further abstraction of the described method leads to a very general method to impress information on synchronization symbols of an LTE or LTE-Advanced communication system. The information stamped on the synchronization symbols according to this invention does not have to be related to beam forming and/or beam hopping patterns and may be used for communicating further pieces of information.

## Claims

1. A method to determine a location of a user equipment, UE, device in a mobile communication system in which an infrastructure node utilizes directional beam signals for the exchange of data between the infrastructure node and the UE device, the method comprising:

- transmitting by the infrastructure node lobe direction specific information according to a predetermined configuration using at least one directional beam signal;
- detecting by the UE device the lobe direction specific information;
- reporting by the UE device the detected lobe direction specific information back to the transmitter; and
- using by the infrastructure node the reported information to determine the location of the UE device,

**characterized in that** the lobe direction specific information is encoded at a physical layer, the physical layer being the lowest layer for communication between a first entity and a second entity according to a multi-layer model known as the open systems interconnection, OSI, model, whereby the lobe direction specific information is encoded within synchronization signals transmitted by the base station by phase shift keying all the symbols of a synchronization signal instance within a slot by a single phase shift value.

2. The method according to claim 1, wherein the lobe direction specific information varies between directional beam signals.

3. The method according to claim 1 or claim 2, wherein the lobe direction specific information is multiplexed in a time and or frequency domain.

4. The method according to any preceding claim, wherein a positioning accuracy of the UE device is enhanced by reporting lobe direction specific information obtained from transmissions from more than one transmitter.

5. The method according to any preceding claim, wherein the determined location is used to control directional antenna properties.

6. The method according to any preceding claim, wherein the determined location is used to control steering of the radio beam signals.

7. The method according to claim 6, wherein the steering of radio beam signals is performed by controlling at least one of a horizontal rotation and a vertical tilt.


**Patentansprüche**

1. Verfahren zum Ermitteln eines Standorts einer Benutzerausrüstungs-, UE-, Vorrichtung, in einem Mobilkommunikationssystem, bei dem ein Infrastrukturknoten Richtstrahlsignale für den Austausch von Daten zwischen dem Infrastrukturknoten und der UE-Vorrichtung verwendet, wobei das Verfahren umfasst:

- Senden von keulenrichtungsspezifischen Informationen durch den Infrastrukturknoten gemäß einer vorgegebenen Konfiguration unter Verwendung mindestens eines Richtstrahlsignals;
- Erfassen der keulenrichtungsspezifischen Informationen durch die UE-Vorrichtung;
- Rückmelden der erfassten keulenrichtungsspezifischen Informationen an den Sender durch die UE-Vorrichtung; und
- Verwenden der gemeldeten Informationen durch den Infrastrukturknoten, um den Standort der UE-Vorrichtung zu ermitteln,

**dadurch gekennzeichnet, dass** die keulenrichtungsspezifischen Informationen in einer physikalischen Schicht codiert sind, wobei die physikalische Schicht die unterste Schicht zur Kommunikation zwischen einer ersten Einheit und einer zweiten Einheit gemäß einem als Modell der Kommunikation offener Systeme, OSI, bekannten Mehrschichtmodell ist, wodurch die keulenrichtungsspezifischen Informationen innerhalb von Synchronisationssignalen, die von der Basisstation gesendet werden, durch Phasenumtastung aller Symbole einer Synchronisationssignalinstanz innerhalb eines Schlitzes durch einen einzigen Phasenverschiebungswert codiert werden.

2. Verfahren nach Anspruch 1, wobei die keulenrichtungsspezifischen Informationen zwischen Richtstrahlsignalen variieren.

3. Verfahren nach Anspruch 1 oder Anspruch 2, wobei die keulenrichtungsspezifischen Informationen in einer Zeit- und/oder Frequenzdomäne gemultiplext werden.

**4.** Verfahren nach einem vorstehenden Anspruch, wobei eine Positionierungsgenauigkeit der UE-Vorrichtung durch Melden von keulenrichtungsspezifischen Informationen, die aus Übertragungen von mehr als einem Sender erhalten werden, verbessert wird.

**5.** Verfahren nach einem vorstehenden Anspruch, wobei der ermittelte Standort verwendet wird, um Antennenrichteigenschaften zu steuern.

**6.** Verfahren nach einem vorstehenden Anspruch, wobei der ermittelte Standort verwendet wird, um Lenken der Funkleitsignale zu steuern.

**7.** Verfahren nach Anspruch 6, wobei das Lenken von Funkleitsignalen durch Steuern mindestens eines von einer horizontalen Drehung und einer vertikalen Neigung durchgeführt wird.

**Revendications**

**1.** Procédé pour déterminer un emplacement d'un dispositif équipement d'utilisateur, UE, dans un système de communication mobile dans lequel un nœud d'infrastructure utilise des signaux de faisceau directionnel pour l'échange de données entre le nœud d'infrastructure et le dispositif UE, le procédé comprenant :

- la transmission, par le nœud d'infrastructure, d'informations spécifiques à une direction de lobe en fonction d'une configuration prédéterminée à l'aide d'au moins un signal de faisceau directionnel ;
- la détection, par le dispositif UE, des informations spécifiques à la direction de lobe ;
- la notification, par le dispositif UE, des informations spécifiques à la direction de lobe détectées auprès de l'émetteur ; et
- l'utilisation, par le nœud d'infrastructure, des informations notifiées pour déterminer l'emplacement du dispositif UE,

**caractérisé en ce que** les informations spécifiques à la direction de lobe sont codées au niveau d'une couche physique, la couche physique étant la couche la plus basse pour la communication entre une première entité et une seconde entité selon un modèle multicouche connu sous le nom de modèle d'interconnexion des systèmes ouverts, OSI, selon lequel les informations spécifiques à la direction de lobe sont codées dans des signaux de synchronisation transmis par la station de base par une modulation par déplacement de phase, d'une valeur de déphasage unique, de tous les symboles d'une instance de signal de synchronisation contenus dans un créneau.

**2.** Procédé selon la revendication 1, dans lequel les informations spécifiques à la direction de lobe varient entre des signaux de faisceau directionnel.

**3.** Procédé selon la revendication 1 ou la revendication 2, dans lequel les informations spécifiques à la direction de lobe sont multiplexées dans un domaine temporel et ou un domaine fréquentiel.

**4.** Procédé selon une quelconque revendication précédente, dans lequel une précision de positionnement du dispositif UE est accrue par notification des informations spécifiques à la direction de lobe obtenues à partir d'émissions de plus d'un émetteur.

**5.** Procédé selon une quelconque revendication précédente, dans lequel l'emplacement déterminé est utilisé pour commander des propriétés d'antenne directionnelle.

**6.** Procédé selon une quelconque revendication précédente, dans lequel l'emplacement déterminé est utilisé pour commander l'orientation des signaux de faisceau radio.

**7.** Procédé selon la revendication 6, dans lequel l'orientation des signaux de faisceau radio est mise en œuvre par la commande d'au moins l'une d'une rotation horizontale et d'une inclinaison verticale.

Fig. 1

Fig. 2

Fig. 3

Fig. 4

Sub Section H

Macro
Cell
Layer

TRP B

DL Signal B_y

DL Signal B_x

Small
Cell
Layer

TRP A

Measurement
Reporting

UE

Base Station B

Sub Section G

Base Station A

## Fig. 5

f

slot #0 or #10

LDI

DC-carrier

t

LDI

Symb-5
with S-SS

Symb-6
with P-SS

## Fig. 6

**Slot #0:**
- SSS giving phase reference (no PSK )
- PSS encoded with PSK (first bit))

**Slot #10:**
- SSS encoded with PSK (second bit)
- PSS encoded with PSK (third bit)

🔲 Slot containing synchronization signals
PSS and SSS in symbols #5 and #6.

## Fig. 7

**Slot #10 in frame n:**
- SSS encoded with PSK (third bit)
- PSS encoded with PSK (fourth bit)

**Slot #10 in frame (n+1):**
and so on ...

**Slot #0 in frame n:**
- SSS encoded with PSK (first bit)
- PSS encoded with PSK (second bit)

**Slot #0 in frame (n+1):**
- SSS encoded with PSK (fifth bit)
- PSS encoded with PSK (sixth bit)

🔲 Slot containing synchronization signals
PSS and SSS in symbols #5 and #6.

## Fig. 8

Fig. 9

TRP B
(small cell layer)

TRP A
(macro cell layer)

UE

Meas. Config

DL Signal B$_n$
(incl. LDI)

Measurement
Collection

Threshold
Comparison

Reporting Event
Detection

May occur n times.

Info Exchange
(incl. LDI)

Meas. Reporting
(incl. LDI)

Derivation of
Parameters

Lobe Direction
Adjustment

time

Connection Set-Up Procedure

Fig. 10

Fig. 11

**EP 3 849 100 B1**

## REFERENCES CITED IN THE DESCRIPTION

**Patent documents cited in the description**

- US 2014235254 A1
- US 20140349677 A1
- WO 2016011666 A1
- US 20180352447 A1
- WO 2013185322 A1